# EUROPEAN PATENT SPECIFICATION

(11) **EP 2 164 893 B1**
(45) Date of publication and mention of the grant of the patent: **26.06.2013**
(21) Application number: 08758586.5
(22) Date of filing: 16.05.2008
(51) Int. Cl.: C08J 9/00, C08J 9/12, C08J 9/14, C08L 23/06, C08J 9/08

(54) **POLYETHYLENE FOAM**
POLYETHYLENSCHAUMSTOFF
MOUSSE DE POLYÉTHYLÈNE

(30) Priority: 31.05.2007 EP 07010777
(43) Date of publication of application: 24.03.2010
(73) Proprietor: Saudi Basic Industries Corporation, 11422 Riyadh (SA)
(72) Inventor: DE VOS, Roelof, Franciscus, Gerardus, Maria, NL-6160 GA Geleen (NL); SENGUPTA, Pratip, NL-6160 GA Geleen (NL); KRIST, Johan, Maria, NL-6160 GA Geleen (NL); RUINAARD, Hendrikus, Pieter, NL-6160 GA Geleen (NL)
(74) Representative: Zuideveld, Mihaela
(86) International application number: PCT/EP2008/003960
(87) International publication number: WO 2008/145267

(56) References cited:
- WO-A-02/072691
- GB-A- 1 595 106
- US-A- 5 428 093
- DATABASE WPI Week 199423 Thomson Scientific, London, GB; AN 1994-189068 XP002442701 -& JP 06 128403 A (NIPPON UNICAR CO LTD) 10 May 1994 (1994-05-10)
- DATABASE WPI Week 200420 Thomson Scientific, London, GB; AN 2004-205594 XP002442702 -& JP 2002 338722 A (INOAC CORP KK) 27 November 2002 (2002-11-27)

## Description

The invention relates to physically blown polyethylene foam.

Polyethylene foams are described in Ullmann's Encyclopedia "Foamed Plastics" by Heinz Weber et al. (2002; Wiley VCH Verlag). These foams are classified as low density and high density foams. These foams may be non-crosslinked or crosslinked foams. Most polyolefin foams and most polyethylene foams are made from low density polyethylene (LDPE).

Foam based on low density polyethylene can be shaped in different semi-finished products such as for example sheets, rods, profiles and tubes. The expansion of LDPE results in a substantial reduction of the polyethylene density. LDPE applied as the raw material for the foam has a specific density of for example about 915-935 kg/m³ and next the average density of PE foam is for example about 20-300 kg/m³. In addition to the weight that is changed during the foam process also other properties that are gained by the PE in its foamed state are jointly responsible for the many applications of the obtained foam.

LDPE foam can be produced for example through extrusion technology. In this process the blowing gas is injected directly into the PE melt under pressure and homogeneously dissolved and mixed in the molten polyethylene. A minimum pressure, which depends on the gas used and the prevailing melt temperature, is needed to keep the gas dissolved in the PE melt. This pressure needs to be maintained through to the extruder in order to prevent the gas from expanding prematurely from the melt. On exiting from the die, the melt pressure decreases to the atmospheric pressure and the dissolved gas expands immediately from the melt to form the foam.

Cells in foams can be open or closed. In closed cells the gas is enclosed within a membrane of PE. Closed cell foams have better thermal insulation properties and better cushioning properties than open cell foams or partially open cell foams.

The size of the cells is on the one hand an equilibrium between the gas pressure in the cell and the resistance of the polymer posed by viscosity to this gas pressure and on the other dependent on the number of nuclei (= nucleating agent particles) and hence on the number of cells that have formed. Cell growth ceases the moment the polyethylene melt reaches its crystallization temperature and the melt changes to the solid phase. In order to increase the viscosity in the melt and to shorten the cell growth time, the temperature of the polyethylene melt in the extruder and/or special melt coolers is reduced to just above the polyethylene crystallization temperature.

The trend among foam producers is to achieve smaller cell size with closed cell structure and thus attain better optics, better thermal insulation, and higher compression set. To achieve foams with predominantly closed cells the melt must have a high viscosity. In sheet foams this is presently achieved by cross linking the extrudates prior to foaming in ovens. Generally, the sheet foaming process is performed in the presence of expensive chemical blowing agents.

Direct foaming of LDPE having a low melt flow rate (MFR) in an extruder is difficult because of the heat introduction due to friction. The higher the heat of friction the more heat must be dissipated to bring the melt temperature at the die near to the crystallization temperature. Therefore an ideal composition of LDPE for foaming must have a good balance between melt strength and processability.

Due to the need to balance the melt strength and the processability, some properties of the finished foam have to be compromised for other more desirable properties. For example corrugation is an undesirable phenomenon in foam sheets and tubes prepared by a direct extrusion process. The corrugations which can be present in all direct extruded foam products are manifested in periodic bands which are oriented transverse on the extrusion direction within the extruded foam varying in width between 1 and 5 cm depending on the foam thickness, foam density and cell dimensions. Generally speaking, the number and height of the waves increases with for example a decrease in foam density, cell dimensions, foam thickness, bubble expansion ratio of a tubular foam and increase in broadness of a cast die. Corrugation not only detracts from the aesthetics but also reduce the overall mechanical properties of parts made from the foam. As an example waves in the sheet foam on a concrete or on a wooden floor will make it difficult to apply parquet on it.

It is an object of the present invention to prevent corrugation while maintaining the other desired features of the foam.

The polyethylene foam having a density between 20 and 300 kg/m³ according to the invention is based on
a. a blend comprising 95.5% by weight -99.5% by weight low density polyethylene and 0.5% by weight - 4.5% by weight high density polyethylene and wherein the composition does not comprise a polyethylene wax
b. a nucleating agent and
c. a cell stabiliser.

The % by weight is relative to the total amount of low density polyethylene (LDPE) and high density polyethylene (HDPE) in the blend comprising HDPE and LDPE.

The polyethylene foam according to the invention obtained with for example a tubular foam process or a bubble foam process results in an improved behaviour with respect to corrugation because the specific polymer composition comprising the specific amounts of low density polyethylene and high density polyethylene results in a synchronization of the transverse directional expansion of the cells and the bubble diameter expansion due to the blow up ratio.

The polyethylene foam according to the invention obtained with a cast die process results in an improved behaviour with respect to corrugation because the specific polymer composition comprising the specific amounts of low density polyethylene and high density polyethylene results in a synchronization of the transverse directional expansion of the cells and the pull-off speed of the extruded foam.

The polyethylene foam according to the invention is corrugation free foam.

The polyethylene foam according to the invention shows an excellent high melt strength foam quality.

Other advantages of the foam according to the invention are the improved optical characteristics, the improved thermal insulation and the improved mechanical properties such as for example the compressive strength. These advantages are obtained without sacrificing processability.

The polyethylene foam according to the invention has a density between 20 and 300 kg/m³. The density depends amongst others of the selection of the blowing agent.

Generally LDPE applied in the blend has a melt flow rate (MFR) at 2.16 kg load and 190°C ranging between 0.1 and 30 g/10 min.

Preferably MFR ranges between 0.2 and 3 g/10 min.

Generally the density of the LDPE applied in the blend ranges between 915 kg/m³ and 935 kg/m^{3.} Preferably the density of the LDPE blend ranges between 921 kg/m³ and 935 kg/m³

The LDPE homo or copolymer may be obtained for example by a tubular process, by an autoclave process or by a metallocene based process.

A suitable LDPE copolymer may be obtained with a process as disclosed in WO 2006094723. This patent publication discloses LDPE obtained with a process wherein the polymerisation of ethylene takes place in a tubular reactor at a peak temperature between 290°C and 350°C, the co monomer is a di-or higher functional (meth) acrylate such as for example BDDMA and wherein the co monomer is applied in an amount between 0.008 mol % and 0.200 mol % relative to the amount of ethylene copolymer.

Generally the HDPE applied in the blend has a MFR at 2.16 kg load and 190°C ranging between 0.05 and 30 g/10 min.

Preferably the MFR at 2.16 kg load and 190°C of HDPE ranges between 0.1 and 10 g/10 min.

Generally the density of the HDPE applied in the blend ranges between 940 kg/m³ and 970 kg/m³.

HDPE may be obtained either by a gas phase process, a slurry process and a solution process.

According to a preferred embodiment of the invention the foam is based on a blend comprising 97.0% by weight - 99.5% by weight low density polyethylene and 0.5% by weight - 3.0% by weight high density polyethylene.

According to a further preferred embodiment of the invention the foam is based on a blend comprising 97.5% by weight - 99.0% by weight low density polyethylene and 1.0% by weight - 2.5% by weight high density polyethylene.

The synchronization of the transverse directional expansion of the cells can be achieved by creating a delay in the expansion of the cells. Decreasing the MFR of LDPE to increase the melt viscosity is not desirable because of its negative consequence on processability. The other possibility is to create a physical network in the melt during the process of bubble expansion at the die exit. Such a network can be made using "pre-crystallization "(early solidifying) of one component. This component should delay the foaming using crystallization and at the same time should be compatible with the PE melt.

The use of HDPE in LDPE creates a delay in the blowing gas expansion due to increased melt strength. In case the specific blend according to the invention is applied HDPE is totally compatible with LDPE and dispersed and homogenized on molecular scale. Since HDPE starts crystallizing earlier than LDPE during cooling of the LDPE-HDPE blend, the rate of viscosity increase of the blend is higher as compared to cooling of a system wherein only LDPE is present. Since HDPE is homogeneously distributed, the HDPE crystals form a physical network within the LDPE melt causing increased melt viscosity. The delay in foaming caused by the HDPE crystallization results in widening of the operating window. This enables to minimize corrugation. Therefore the blend according to the invention results in an increase of the melt strength of the LDPE. The melt strength characterizes the ability of a resin to keep thin melt films stable. When manufacturing the light weight forms, high melt strength avoids bursting of cell walls thus improving the foamability of a resin. The increased melt strength results also in achieving lower foam densities. The melt strength of polymer-gas mixtures can be determined by different methods as disclosed for example in "Foam Extrusion principles and Practices" (pages 35-77; S.T. Lee ). The melt viscosity of a polymer as measured by dynamical mechanical spectrometer DMS (temperature sweep at fixed frequency, frequency sweep at constant temperature) is a measure of the melt strength.

LDPE can be blended with HDPE for example after the production of LDPE during granulation or during the production of the foam using mixing equipments, with a single - screw extruder or a twin -screw extruder.

According to a preferred embodiment of the invention HDPE and LDPE are blended during granulation after the production of LDPE. This method of blending results in an absolute uniform mix of HDPE in LDPE and next in excellent foaming performances.

The amount of HDPE in LDPE can be detected using standard DSC or TREF DSC. The peak of HDPE is seen during heating and also cooling of the melt.

If the blend comprises more than 4.5% by weight of HDPE the resulting melt looses elongation viscosity and as a consequence foamability. The obtained foam product is difficult to handle. For example in foam sheet production it is not possible to put the product over the cylindrical mandrel as required during production of sheets because of "brittle" behaviour of the semi solid foams.

If the blend comprises less than 0.5% by weight of HDPE the resulting melt lacks melt strength and corrugation cannot be prevented.

The composition according to the invention also comprises a nucleating agent, These agents may be necessary to increase the cell density and to modify the dynamics of bubble formation and growth. (Gendron, Thermoplastic foam Processing, 2005, page 209)

Suitable nucleating agents include for example talcum, silica and a mixture of sodium bicarbonate and citric acid. Other suitable nucleating agents include an amide, an amine and/or an ester of a saturated or unsaturated aliphatic (C₁₀-C₃₄) carboxylic acid. As disclosed in EP-A-1308475 the presence of nucleating agents result in a highly regular, fine cellular foam structure and soft surface,

Examples of suitable amides include fatty acid (bis)amides and alkylenediyl-bis-alkanamides, preferably (C₂-C₃₂) alkylenediyl-bis-(C₂-C₃₂) alkanamides, such as for example ethylene bistearamide (EBS), butylene bistearamide, hexamethylene bistearamide and/or ethylene bisbehenamide.

Suitable amines include or instance (C₂-C₁₈) alkylene diamines such as for example ethylene biscaproamine and hexamethylene biscaproamine .

Preferred esters of a saturated or unsaturated aliphatic (C₁₀-C₃₄) carboxylic acid are the esters of an aliphatic (C₁₆-C₂₄) carboxylic acid.

Generally, the nucleating agent is present in an amount between 0.1 and 4.0 wt % relative to the polyethylene blend. Preferably the nucleating agent is present in an amount between 0. 5 and 1.0 wt % relative to the polyethylene blend

According to a preferred embodiment of the invention the nucleating agent is ethylene bis stearamide or talcum.

The invention is also directed to a process for physical foaming of polyethylene in the presence of a physical blowing agent, a nucleating agent, a cell stabiliser and/or other additives wherein the polyethylene is a blend according to the present invention.

Preferably, the foaming process takes place at temperature lower than 118 °C.

Suitable physical blowing agents include for example isobutane, CO₂, pentane, butane, nitrogen and/or a fluorohydrocarbon.

Preferably the physical blowing agent is isobutane and/or CO₂.

According to a preferred embodiment of the invention the composition according to the invention contains a cell stabilizer. These cell stabilisers are permeability modifiers which retard the diffusion of for example hydrocarbons such as isobutene to create dimensionally stable foams.

### (Gendron, Thermoplastic foam Processing, 2005, pages 31 and 149)

Preferred cell stabilizers include for example glycerol monostearate (GMS), glycerol monopalmitate (GMP), palmitides and/or amides. Suitable amides are for example stearyl stearamide, palmitide and/or stearamide. Suitable mixtures include for example a mixture comprising GMS and GMP or a mixture comprising stearamide and palmitamide.

More preferably, the cell stabiliser is glycerol monostearate or stearamide.

The amount of cell stabiliser to be added depends on cell size. Generally, the cell stabiliser may be added in an amount of between 0.1 and 1.5 wt % relative to the polyethylene blend. Preferably the cell stabiliser is added in an amount between 0.5 and 1 wt % relative to the polyethylene blend

The composition may additionally contain other additives such as for example flame retardants, pigments, lubricants, flow promoters, antistatic agents, , processing stabilizers, long term stabilisers and/or UV stabilizers. Preferably, waxes such as polyethylene wax are excluded as additive. The additives may be present in any desired amount to be determined by the man skilled in the art. The composition according to the present invention does not comprise a polyethylene wax.

The composition may also comprise other polymers such as for example linear low density polyethylene (LLDPE) (C₄, C₆ and C₈ copolymers), ethylene vinyl acetate (EVA), ethylene methacrylic acid (EMA) and/or polyethylene obtained with a metallocene catalyst having for example a density in the range between 880 and 930 kg/m³. Preferably linear low density polyethylene (LLDPE) and/or polyethylene obtained with a metallocene catalyst are applied in amounts between for example 5 and 30 % by weight relative to the total amount of LDPE and HDPE.

Another advantage of the composition according to the invention is that crosslinking of the foam to achieve microcellular cell structure is not necessary.

The microcellular foam according to the invention has optics similar to that obtained by a crosslinked process being a multi step process. It is an advantage of the process according to the present invention that the process is a one step process.

It is a further advantage of the process according to the present invention that a corrugation free cellular foam is obtained.

The foaming conditions in the physical foaming process depend in part on the applied polyethylene.

Furthermore the bubble stability of the thin sheet is improved and a higher amount of closed cells is obtained after foaming. The use of the compositions according to the present invention results in more closed cells having at least 70% closed structure.

The fine cellular foam of the invention may be used for example in the production of film, sheet, profiles, rods and tubes. Examples are foam sheeting for floor insulation, as foam section for protecting glass plates, as foamed heat insulation tubing for hot-water pipes and as foamed packaging film.

GB1595106 is directed to the manufacturing of foam plastic film to be used as printed wall or ceiling coverings whereas the foam of the present invention will be applied in different fields of application such as in the production of film, sheet, profiles, rods and tubes.

The foam disclosed in GB1595106 has a high density of 400 kg/m³ whereas the polyethylene foam according to the present invention has a density preferably ranging between 20 and 300 kg/m³

GB1595106 discloses a closed cell foam plastic film manufactured from a polymer mixture comprising 90.5 - 99.9 % by weight of low density polyolefin and 0,1 - 9,5 % by weight of crystalline polymer. In case the selected crystalline polymer is a high density polyethylene GB1595106 teaches that the mixture comprises 90.5 - 95 % by weight of low density polyolefin and 5-9, 5 % by weight of high density polyethylene. This range is outside the range of 0.5% by weight - 4.5% by weight according to the present invention. If the blend according to the present invention comprises more than 4.5% by weight of HDPE the resulting melt looses elongation viscosity and as a consequence foamability and the obtained foam product is difficult to handle.

Furthermore the present invention shows that in case the blend comprises less than 0.5% by weight of HDPE the resulting melt lacks melt strength and the undesired corrugation cannot be prevented.

JP 06128403 discloses the addition of a chemical blowing agent to a composition containing 100 parts by weight of low density polyethylene with a density between 890 and 925 kg/m³, 1-110 parts by weight high density polyethylene having a density between 945 and 961 kg/m³ and a polyethylene wax.

JP 06128403 does not give any indication for the specific range between 0.5% by weight and 4.5% by weight of high density polyethylene.

The process according to JP 06128403 discloses a foaming temperature between 130 °C and 160 °C whereas the process according to the present invention takes place at a temperature lower than 118 °C.

JP 06128403 teaches that the chemical blowing agent and the wax are essential to obtain a highly foamed insulator. In contrast the foam according to the present invention is not based on a chemical blowing agent. This difference is essential because blowing agents play a very important role in both manufacturing and performance of polymer foam. Chemical and physical blowing agents are different and the selection of the blowing agents is important for the processing steps and the process conditions.

Furthermore the foam of the present invention will be applied in different fields of application such as in the production of film, sheet, profiles, rods and tubes whereas the use of the foam according to JP 06128403 is restricted to highly foamed insulating cables with the remark that a tube and a cable insulation are different .

The invention will be elucidated by means of the following non-restrictive examples.

### Examples I-IV and Comparative Examples A- D

The LDPE based foaming recipes used are shown in Table 1. The materials were compounded in a ZSK-40 twin-screw extruder. The shear viscosity of all materials was measured as a function of temperature using DMS (temperature sweep at fixed frequency of 1 Hz).

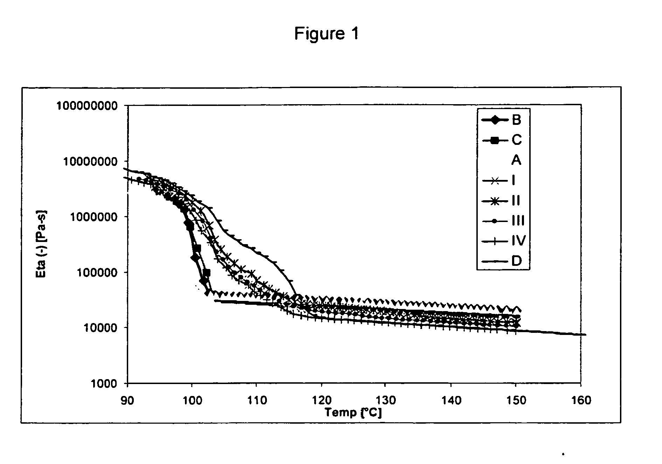

The temperature sweep plots are shown in Figure 1.

The shear viscosity data at 110°C and 97°C, which corresponds to the onset of crystallization temperatures of HDPE and LDPE, are given in Table 1.

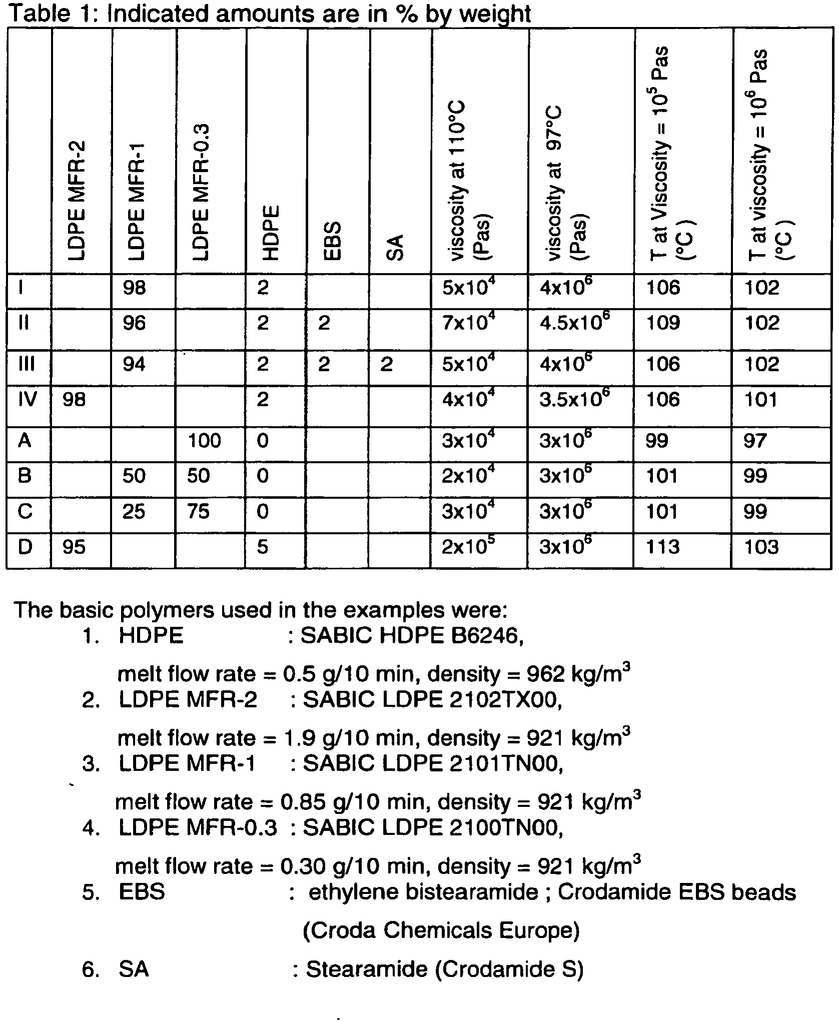

The melt flow rate of the basic polymers was measured at 2.16 kg at load 190°C.

At temperatures higher than the onset of crystallization point of HDPE (110°C), all compositions showed almost comparable melt viscosities. When the crystallization temperature of HDPE was reached, the viscosities of the LDPE/HDPE blends in the Examples I-IV became higher than the LDPE blends in the Comparative Examples A-D. With further decrease of temperature from 110°C to 105°C, the viscosities of the LDPE/HDPE blends keep on increasing while the viscosity of pure LDPE and blends of LDPE remained unchanged. At the onset of crystallization temperature of LDPE (97°C), there was an instant increase of shear viscosity for the pure LDPE and LDPE/LDPE blends. At this point the foam surface crystallized and no further expansion was possible. The LDPE/HDPE blends also attained the same viscosity at 95°C but the increase was not steep as the pure LDPE or LDPE/LDPE blends. Thus the operating window for pure LDPE or LDPE/LDPE blends was broadened by incorporation of 2% HDPE.

Example D containing 5 wt% HDPE in LDPE was not found to be suitable for foaming. A comparison of DMS curves showed that the viscosity increase is steeper than Examples I-IV. The melt strength increase with 5 wt% HDPE was too high for obtaining good foaming performances.

These compounds were fed into the feed hopper of a conventional 60 mm single screw extruder with a length of 40D including an oil cooled cylinder adapter with a length of 11 D. Additionally the extruder was equipped with a Sulzer mixer for the well defined temperature mix of the melt and 0.5 x 50 mm annular die. After the resin-additive mixtures were melted, carbon dioxide was injected into the molten resinous mass and admixed therewith. Finally, the mixture was extruded through the die orifice whereby a hollow foam tube was produced. Upon emerging from the die orifice, the foam tube was expanded and drawn onto and over the surface of a mandrel which helps to shape the tube and cool it, the mandrel surface being cooled and "lubricated" by air therein.

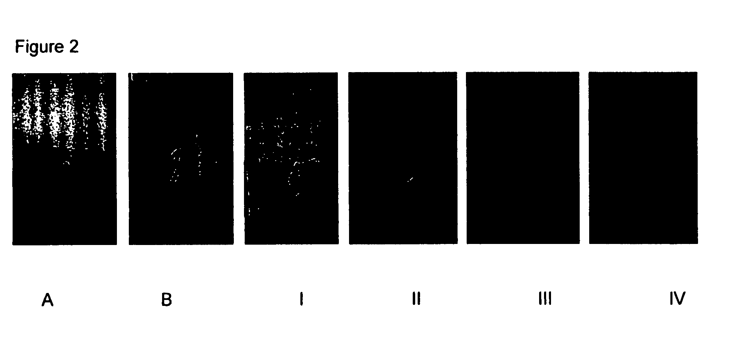

As shown in Figure 2 the compositions according to the Examples
I-IV has significant improvements with regard to corrugation in comparison to the Comparative Examples A-B.

### Example V and Comparative Example E

The LDPE/HDPE blend (SABIC HDPE B6246 and SABIC LDPE 2102TX00) according to Example V in Table 2 was foamed into rods using isobutane as a blowing agent. Foaming was performed using a standard single screw foam extruder fitted with a 25 mm rod die, to achieve a density of 30 kg/m³. The delay was calculated as time taken for 100% expansion (T100), if one knows the extrusion speed of the foam.

The LDPE foam (based on SABIC HDPE B6246) according to Comparative Example E reached 100% expansion in 0.008 seconds whereas the foam based on the blend according to Example V reached 100% expansion in 0.02 seconds. This means that delay was caused by increased melt strength in LDPE/HDPE blends as compared to LDPE based foam formulations.

**Table 2: Amounts in % by weight**

| | LDPE MFR= 2, density = 921 kg/m³ | HDPE MFR= 0.5, density = 962 kg/m³ | Stearamide | T100 seconds |
|---|---|---|---|---|
| E | 98 | 0 | 2 | 0.008 |
| V | 97.5 | 0.5 | 2 | 0.02 |

## Claims

1. Physically blown polyethylene foam having a density between 20 and 300 kg/m³ based on
a. a blend comprising 95.5% by weight - 99.5% by weight low density polyethylene and 0.5% by weight - 4.5% by weight high density polyethylene wherein the % by weight is relative to the total amount of low density polyethylene and high density polyethylene in the blend and wherein the composition does not comprise a polyethylene wax
b. a nucleating agent and
c.a cell stabiliser.

2. Polyethylene foam according to Claim 1, **characterized in that** the blend comprises 97.0% by weight - 99.5% by weight low density polyethylene and 0.5% by weight - 3.0% by weight high density polyethylene.

3. Polyethylene foam according to any one of Claims 1-2, **characterized in that** the density of the low density polyethylene ranges between 921 kg/m³ and 935 kg/m³

4. A process for physical foaming of polyethylene at a temperature lower than 118 °C in the presence of a physical blowing agent and a nucleating agent to obtain a physically blown polyethylene foam having a density between 20 and 300 kg/m³ **characterized in that** the polyethylene is a blend comprising 95.5% by weight - 99.5% by weight low density polyethylene and 0.5% by weight - 4.5% by weight high density polyethylene wherein the % by weight is relative to the total amount of low density polyethylene and high density polyethylene in the blend, wherein during the process a cell stabiliser is present and wherein the composition does not comprise a polyethylene wax.

5. A process according to any one of Claim 4, **characterized in that** the blowing agent is isobutane, CO₂, pentane, butane, nitrogen and/or a fluorohydrocarbon.

6. A process according to Claim 5, **characterized in that** the blowing agent is isobutane or CO₂.

7. A process according to any one of Claims 4-6, **characterized in that** the nucleating agent is talcum, silica, a mixture of sodium bicarbonate and citric acid, an amide, an amine and/or an ester of a saturated or unsaturated aliphatic (C₁₀-C₃₄) carboxylic acid.

8. A process according to any one of Claims 4-7, **characterized in that** the cell stabiliser is glycerol monostearate, glycerol monopalmitate, palmitamide and/or an amide.

9. A process according to any one of Claims 4-8, **characterized in that** the blend is obtained by blending HDPE and LDPE during granulation after the production of LDPE.

10. Use of the polyethylene foam according to any of Claims 1-3 and use of the polyethylene foam obtained by the process according to any one of Claims 4-9 in the production of films, sheets, profiles, rods and tubes.

## Patentansprüche

1. Physikalisch getriebener Polyethylenschaumstoff mit einer Dichte zwischen 20 und 300 kg/m³ auf der Basis von
a. einer Mischung, die 95,5 Gew.-% - 99,5 Gew.-% Polyethylen niederer Dichte und 0,5 Gew.-% - 4,5 Gew.-% Polyethylen hoher Dichte umfasst, wobei Gew.-% sich auf die Gesamtmenge von Polyethylen niederer Dichte und Polyethylen hoher Dichte in der Mischung bezieht und wobei die Zusammensetzung kein Polyethylenwachs umfasst,
b. ein Nukleierungsmittel und
c. einen Zellstabilisator.

2. Polyethylenschaumstoff nach Anspruch 1, **dadurch gekennzeichnet, dass** die Mischung 97,0 Gew.-% - 99,5 Gew.-% Polyethylen niederer Dichte und 0,5 Gew.-% - 3,0 Gew.-% Polyethylen hoher Dichte umfasst.

3. Polyethylenschaumstoff nach einem der Ansprüche 1-2, **dadurch gekennzeichnet, dass** die Dichte des Polyethylens niederer Dichte zwischen 921 kg/m³ und 935 kg/m³ liegt.

4. Verfahren zum physikalischen Verschäumen von Polyethylen bei einer Temperatur von weniger als 118°C in Gegenwart eines physikalischen Treibmittels und eines Nukleierungsmittels zu einem physikalisch getriebenen Polyethylenschaumstoff mit einer Dichte zwischen 20 und 300 kg/m³, **dadurch gekennzeichnet, dass** es sich bei dem Polyethylen um eine Mischung handelt, die 95,5 Gew.-% - 99,5 Gew.-% Polyethylen niederer Dichte und 0,5 Gew.-% - 4,5 Gew.-% Polyethylen hoher Dichte umfasst, wobei Gew.-% sich auf die Gesamtmenge von Polyethylen niederer Dichte und Polyethylen hoher Dichte in der Mischung bezieht, wobei während des Verfahrens ein Zellstabilisator vorliegt und wobei die Zusammensetzung kein Polyethylenwachs umfasst.

5. Verfahren nach Anspruch 4, **dadurch gekennzeichnet, dass** es sich bei dem Treibmittel um Isobutan, CO₂, Pentan, Butan, Stickstoff und/oder einen Fluorkohlenwasserstoff handelt.

6. Verfahren nach Anspruch 5, **dadurch gekennzeichnet, dass** es sich bei dem Treibmittel um Isobutan oder CO₂ handelt.

7. Verfahren nach einem der Ansprüche 4-6, **dadurch gekennzeichnet, dass** es sich bei dem Nukleierungsmittel um Talk, Siliciumdioxid, eine Mischung von Natriumhydrogencarbonat und Citronensäure, ein Amid, ein Amin und/oder einen Ester einer gesättigten oder ungesättigten aliphatischen (C₁₀-C₃₄) - Carbonsäure handelt.

8. Verfahren nach einem der Ansprüche 4-7, **dadurch gekennzeichnet, dass** es sich bei dem Zellstabilisator um Glycerinmonostearat, Glycerinmonopalmitat Palmitamid und/oder ein Amid handelt.

9. Verfahren nach einem der Ansprüche 4-8, **dadurch gekennzeichnet, dass** die Mischung durch Mischen von HDPE und LDPE während der Granulation nach der Herstellung von LDPE erhalten wird.

10. Verwendung des Polyethylenschaumstoffs nach einem der Ansprüche 1-3 und Verwendung des durch das Verfahren nach einem der Ansprüche 4-9 hergestellten Polyethylenschaumstoffs bei der Herstellung von Filmen und Folien, Platten, Profilen, Stäben und Rohren.

## Revendications

1. Mousse de polyéthylène physiquement gonflée ayant une masse volumique comprise entre 20 et 300 kg/m³ à base de
a. un mélange comprenant 95,5 % en poids-99,5 % en poids de polyéthylène basse densité et 0,5 % en poids-4,5 % en poids de polyéthylène haute densité, le % en poids étant par rapport à la quantité totale de polyéthylène basse densité et de polyéthylène haute densité dans le mélange et la composition ne comprenant pas une cire de polyéthylène,
b. un agent de nucléation et
c. un stabilisant des cellules.

2. Mousse de polyéthylène selon la revendication 1, **caractérisée en ce que** le mélange comprend 97,0 % en poids-99,5 % en poids de polyéthylène basse densité et 0,5 % en poids-3,0 % en poids de polyéthylène haute densité.

3. Mousse de polyéthylène selon l'une quelconque des revendications 1-2, **caractérisée en ce que** la masse volumique du polyéthylène basse densité est comprise entre 921 kg/m³ et 935 kg/m³.

4. Procédé pour le moussage physique de polyéthylène à une température inférieure à 118 °C en présence d'un agent gonflant physique et d'un agent de nucléation pour obtenir une mousse de polyéthylène physiquement gonflée ayant une masse volumique comprise entre 20 et 300 kg/m³ **caractérisé en ce que** le polyéthylène est un mélange comprenant 95,5 % en poids-99,5 % en poids de polyéthylène basse densité et 0,5 % en poids-4,5 % en poids de polyéthylène haute densité, le % en poids étant par rapport à la quantité totale de polyéthylène basse densité et de polyéthylène haute densité dans le mélange, un stabilisant des cellules étant présent pendant le procédé et la composition ne comprenant pas une cire de polyéthylène.

5. Procédé selon la revendication 4, **caractérisé en ce que** l'agent gonflant est l'isobutane, le CO₂, le pentane, le butane, 1 l'azote et/ou un hydrocarbure fluoré.

6. Procédé selon la revendication 5, **caractérisé en ce que** l'agent gonflant est l'isobutane ou le CO₂.

7. Procédé selon l'une quelconque des revendications 4-6, **caractérisé en ce que** l'agent de nucléation est le talc, la silice, un mélange de bicarbonate de sodium et d'acide citrique, un amide, une amine et/ou un ester d'un acide carboxylique aliphatique en C₁₀-C₃₄ saturé ou insaturé.

8. Procédé selon l'une quelconque des revendications 4-7, **caractérisé en ce que** le stabilisant des cellules est le monostéarate de glycérol, le monopalmitate de glycérol, le palmitamide et/ou un amide.

9. Procédé selon l'une quelconque des revendications 4-8, **caractérisé en ce que** le mélange est obtenu par mélange de HDPE et de LDPE pendant la granulation après la production de LDPE.

10. Utilisation de la mousse de polyéthylène selon l'une quelconque des revendications 1-3 et utilisation de la mousse de polyéthylène obtenue par le procédé selon l'une quelconque des revendications 4-9 dans la production de films, de feuilles, de profilés, de barres et de tubes.
